# FASCICULE DE BREVET EUROPEEN

(11) **EP 2 928 764 B1**
(45) Date de publication et mention de la délivrance du brevet: **22.04.2020**
(21) Numéro de dépôt: 13799049.5
(22) Date de dépôt: 02.12.2013
(51) Int. Cl.: B62M 6/75

(54) **DISPOSITIF D'ASSISTANCE ÉLECTRIQUE POUR VÉLO ET VÉLO À ASSISTANCE ÉLECTRIQUE ÉQUIPÉ DUDIT DISPOSITIF**
ELEKTRISCHER HILFSVORRICHTUNG FÜR EIN FAHRRAD UND ELEKTRISCH UNTERSTÜTZTES FAHRRAD MIT EINER DERARTIGEN VORRICHTUNG
ELECTRIC ASSIST DEVICE FOR A BICYCLE AND ELECTRICALLY ASSISTED BICYCLE PROVIDED WITH SUCH A DEVICE

(30) Priorité: 05.12.2012 FR 1261631
(43) Date de publication de la demande: 14.10.2015
(73) Titulaire: Compagnie Générale des Etablissements Michelin, 63000 Clermont-Ferrand (FR)
(72) Inventeur: OLSOMMER, David, F-63040 Clermont-Ferrand Cedex 9 (FR); ESSINGER, Olivier, F-63040 Clermont-Ferrand Cedex 9 (FR)
(74) Mandataire: Roussy, Delphine
(86) Numéro de dépôt international: PCT/EP2013/075276
(87) Numéro de publication internationale: WO 2014/086727

(56) Documents cités:
- WO-A1-00/40457
- DE-A1- 3 234 729
- DE-A1-102010 039 860
- DE-U1- 29 922 683
- DE-U1-202010 012 992

## Description

La présente invention concerne les dispositifs d'assistance électrique pour vélo et les vélos équipés de tels dispositifs.

Dans ce domaine, on connaît un certain nombre de dispositifs disponibles sur le marché.

Certains de ces dispositifs utilisent une machine électrique placée dans le moyeu de l'une des roues du vélo. Cette machine électrique entraine la roue directement ou par l'intermédiaire d'un système de réduction. Ce type de dispositifs présente l'inconvénient d'une masse importante, cette masse étant en outre située au niveau de la roue ce qui la rend très sensible pour le cycliste. De plus, lorsque l'on doit démonter la roue, par exemple pour changer le pneumatique ou réparer une crevaison, le démontage de la roue est rendu complexe par la présence de connexions électriques qui sont nécessaires à l'alimentation de la machine électrique et de fixations spécifiques du moyeu qui sont nécessaires à la reprise du couple moteur.

D'autres dispositifs utilisent un groupe motoréducteur entrainant le pédalier du vélo et donc utilisant la transmission existante du vélo. Ce type de dispositifs présente l'inconvénient d'impacter profondément l'architecture du vélo de sorte qu'il nécessite en particulier que les cadres des vélos soient conçus spécifiquement pour accueillir ces dispositifs.

Le document DE-20314210-U1 décrit un principe d'entrainement d'un vélo par un moteur électrique dans lequel un pignon moteur engrène sur une denture solidaire du cercle de la jante avant du vélo, ladite denture étant une denture interne, c'est à dire dont les dents pointent vers l'axe de roue. Un inconvénient de ce système est que la denture de la jante est susceptible de retenir des cailloux.

Le document DE29922683U1 montre le préambule de la revendication 1.

L'invention a donc pour objet de proposer un dispositif d'assistance électrique pour vélo ainsi qu'un vélo équipé dudit dispositif qui résolvent tout ou partie de ces difficultés.

L'invention propose pour cela un dispositif d'assistance électrique pour vélo, ledit dispositif comprenant :
- une machine électrique comprenant un rotor,
- un pignon moteur entrainé par le rotor de la machine électrique,
- des moyens de fixation aptes à fixer la machine électrique sur le vélo à proximité d'un bandage d'une roue dudit vélo,
- une source d'énergie électrique pour alimenter la machine électrique,
- des moyens de contrôle de la machine électrique,
ledit dispositif étant caractérisé en ce que le pignon moteur comporte une denture destinée à engrener tangentiellement avec une denture complémentaire solidaire dudit bandage.

Ce type de transmission par pignons et dentures est qualifié de transmission « positive » par opposition aux systèmes de transmission par frottement comme les systèmes à galets. Une transmission positive n'est pas tributaire du coefficient de frottement et donc par exemple peu sensible aux intempéries ou à l'usure des éléments mis en œuvre.

La machine électrique est de préférence un moteur synchrone triphasé sans balai à aimants permanents. De préférence encore le rotor est un rotor externe.

De préférence, la denture du pignon moteur est une denture asymétrique dont les dents comprennent des faces motrices et des faces non-motrices, l'angle d'ouverture des faces motrices étant plus faible que l'angle d'ouverture des faces non-motrices.

De préférence, le pignon moteur est entrainé par la machine électrique par l'intermédiaire d'un mécanisme de roue libre de telle sorte que le bandage n'entraine pas la machine électrique lorsque le vélo se déplace en marche avant.

De préférence encore, la denture du pignon moteur est une denture hélicoïdale.

De préférence encore, ledit dispositif comprend en outre une unité d'affichage et de commande reliée aux moyens de contrôle de la machine électrique et apte à constituer une interface entre le cycliste et les moyens de contrôle.

De préférence encore, ledit dispositif comprend en outre un capteur de pédalage relié aux moyens de contrôle de la machine électrique.

De préférence encore, les moyens de fixation comprennent un bras oscillant articulé sur un support, le support étant destiné à être solidaire du vélo et le bras oscillant portant la machine électrique de sorte que la force motrice transmise au bandage par le pignon moteur engendre une pression radiale supplémentaire dans l'engrènement.

De préférence encore, un moyen élastique exerce une précontrainte sur l'orientation du bras oscillant de sorte que, en l'absence de force motrice, le pignon moteur vient s'appuyer radialement contre le bandage avec une force d'appui non nulle.

De préférence encore, les moyens de fixation définissent au moins deux positons de la machine électrique par rapport au bandage, lesdites au moins deux positions comprenant une position de travail dans laquelle le pignon moteur engrène avec la denture du bandage et une position de repli dans laquelle le pignon moteur est maintenu écarté du bandage.

L'invention concerne également un kit d'assistance électrique pour vélo comprenant le dispositif d'assistance électrique tel que décrit ci-dessus, ledit kit d'assistance électrique comprenant en outre un bandage, ledit bandage étant un bandage pneumatique comportant ladite denture complémentaire.

De préférence, ladite denture complémentaire est placée sur un flanc du bandage pneumatique.

De préférence encore, ladite denture complémentaire est une denture asymétrique dont les dents comprennent des faces motrices et des faces non-motrices, l'angle d'ouverture des faces motrices étant plus faible que l'angle d'ouverture des faces non-motrices.

De préférence encore, le pas de la denture complémentaire est compris entre 1.8 mm et 5.5 mm et de préférence encore entre 1.8 mm et 2.5 mm.

L'invention concerne également un vélo à assistance électrique comprenant un kit d'assistance électrique tel que décrit ci-dessus.

De préférence, le kit d'assistance électrique est installé sur la roue arrière du vélo.

D'autres caractéristiques et avantages de l'invention apparaîtront grâce à la description de modes préférés de réalisation. Les figures représentent respectivement:
- Figure 1 : vue schématique de côté d'un vélo à assistance électrique selon un premier mode de réalisation de l'invention.
- Figure 2 : vue schématique plus détaillée d'un deuxième mode de réalisation d'un vélo à assistance électrique selon l'invention.
- Figure 3 : vue schématique en coupe montrant la coopération de la machine électrique avec le bandage d'un vélo à assistance électrique selon l'invention.
- Figure 4 : vue de détail en coupe de l'engrènement du pignon moteur avec la denture du bandage selon un mode de réalisation préféré de l'invention.
- Figure 5 : vue schématique en coupe du détail de la denture du pignon moteur de la figure 4.
- Figure 6 : vue schématique en coupe du détail d'une denture d'un mode de réalisation préféré d'un bandage selon l'invention.
- Figure 7 : vue de côté d'un pignon moteur à denture hélicoïdale selon un mode de réalisation préféré du dispositif de l'invention.
- Figure 8 : vue en coupe et en perspective d'un bandage pneumatique équipant un vélo selon l'invention.
- Figure 9 : vue schématique en perspective d'un détail d'un mode de réalisation préféré du dispositif d'assistance électrique selon l'invention.
- Figure 10 : vue schématique en perspective du mode de réalisation de la figure 9 selon un point de vue différent.

Les figures représentent différentes vues d'ensemble et de détails de modes de réalisation préférés d'un dispositif d'assistance électrique et d'un vélo à assistance électrique selon l'invention. Sur les différentes figures, les éléments identiques ou similaires portent des références identiques. Les références ne sont pas systématiquement reprises sur chaque figure afin de simplifier la compréhension des dessins.

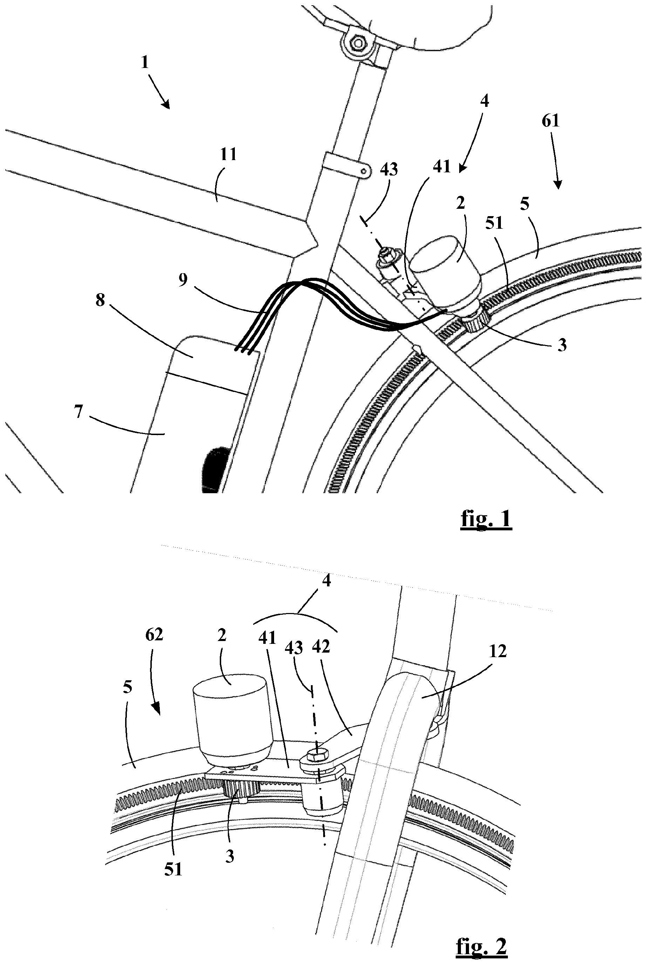

À la figure 1, on voit les éléments principaux d'un vélo à assistance électrique selon l'invention. Une machine électrique 2 est fixée au cadre 11 du vélo 1 à proximité d'un bandage 5, ici à proximité du bandage de la roue arrière 61. Une source d'énergie électrique, ici une batterie 7, alimente la machine électrique par l'intermédiaire de moyens de contrôle 8. Le pignon moteur 3 engrène tangentiellement avec une denture 51 du bandage 5 et peut ainsi lui transmettre une force motrice qui assiste le cycliste.

La figure 2 représente un autre mode de réalisation dans lequel le dispositif d'assistance électrique est destiné à coopérer avec le bandage de la roue avant 62 du vélo. On voit mieux sur cette figure les moyens de fixation 4 de la machine électrique 2. Les moyens de fixation comprennent de préférence un bras oscillant 41 articulé par rapport à un support fixe 42 selon un axe 43 sensiblement parallèle à l'arbre de la machine électrique. Le support 42 est solidaire du vélo, ici de la fourche avant 12 du vélo. Le pignon moteur 3 engrène avec la denture 51 qui est solidaire du flanc du bandage 5. De préférence, les moyens de fixation sont configurés comme ici de manière à ce que la transmission d'une force motrice par le pignon moteur engendre une force dynamique supplémentaire d'appui du pignon sur le bandage et donc une pression radiale supplémentaire dans l'engrènement. Cet effet est par exemple obtenu si l'axe de pivot 43 est comme ici écarté du plan de l'engrènement (écarté vers l'extérieur du bandage dans cette configuration).

De préférence encore un moyen élastique (non visible sur les figures) exerce une précontrainte sur l'orientation du bras oscillant de sorte que le pignon moteur 3, en l'absence de force motrice, vient s'appuyer radialement contre le bandage avec une force d'appui non nulle. Le moyen élastique peut être par exemple un ressort de torsion agissant autour de l'axe de rotation 43 du bras oscillant ou un simple ressort de traction ou de compression agissant directement entre le bras oscillant 41 et le support 42.

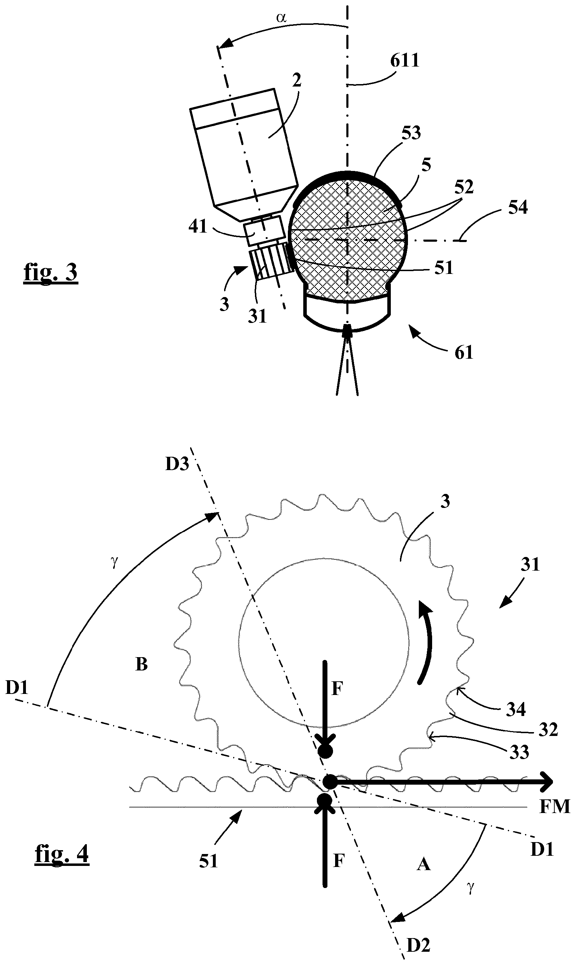

A la figure 3 on a représenté en vue selon le plan de la roue un mode de réalisation préféré de la coopération entre la machine électrique 2 et le bandage 5. On voit la denture 31 du pignon moteur 3 engrener tangentiellement avec la denture complémentaire 51 du bandage. La machine électrique est inclinée d'un angle α par rapport au plan 611 de la roue 61. Selon l'invention, l'angle α peut varier mais il est de préférence compris entre - 10° et + 30°. Sur cet exemple α vaut environ 25°, la denture 51 est solidaire d'un flanc 52 du bandage et se situe radialement sous l'équateur 54. Le bandage peut être un bandage pneumatique ou non-pneumatique, voire un bandage plein.

De préférence, la machine électrique entraine directement le pignon moteur, c'est à dire sans aucun moyen de réduction intermédiaire, le pignon étant porté par l'arbre de la machine électrique. Selon un mode de réalisation préféré de l'invention, un mécanisme de roue libre est cependant interposé entre l'arbre et le pignon de sorte que le bandage n'entraine pas la machine électrique lorsque le vélo se déplace en marche avant. Dans l'hypothèse où le dispositif ne comprendrait pas de roue-libre, une récupération d'énergie électrique peut être réalisée lorsque le cycliste freine.

Comme représenté sur l'ensemble des figures, la machine électrique 2 est de préférence placée radialement à l'extérieur du pignon moteur 3 par rapport à l'axe de la roue du vélo, c'est à dire au-dessus du pignon moteur 3 dans cette configuration.

La figure 4 montre en détail l'engrènement du pignon moteur 3 sur le bandage. Le pignon transmet au bandage une force motrice FM. On voit ici un mode de réalisation préféré dans lequel les dents 32 du pignon sont asymétriques et configurées de sorte que l'angle d'ouverture de leurs faces motrices 33 est plus faible que l'angle d'ouverture de leurs faces non-motrices 34. La forme de la denture complémentaire 51 solidaire du bandage est naturellement adaptée en conséquence. Cette disposition permet d'améliorer sensiblement le rendement de l'engrènement ainsi que d'augmenter la valeur maximale de la force motrice FM transmissible. On a également représenté la force d'appui F du pignon sur le bandage. Cette force est transmise par les moyens de fixation de la machine électrique et a pour effet de maintenir l'engrènement même en cas de déformations des différents éléments du dispositif. Si on appelle F0 la force d'appui du pignon en l'absence de force motrice et FD la force dynamique supplémentaire engendrée par l'effet de la force motrice, on peut dire que F = F0 + FD.

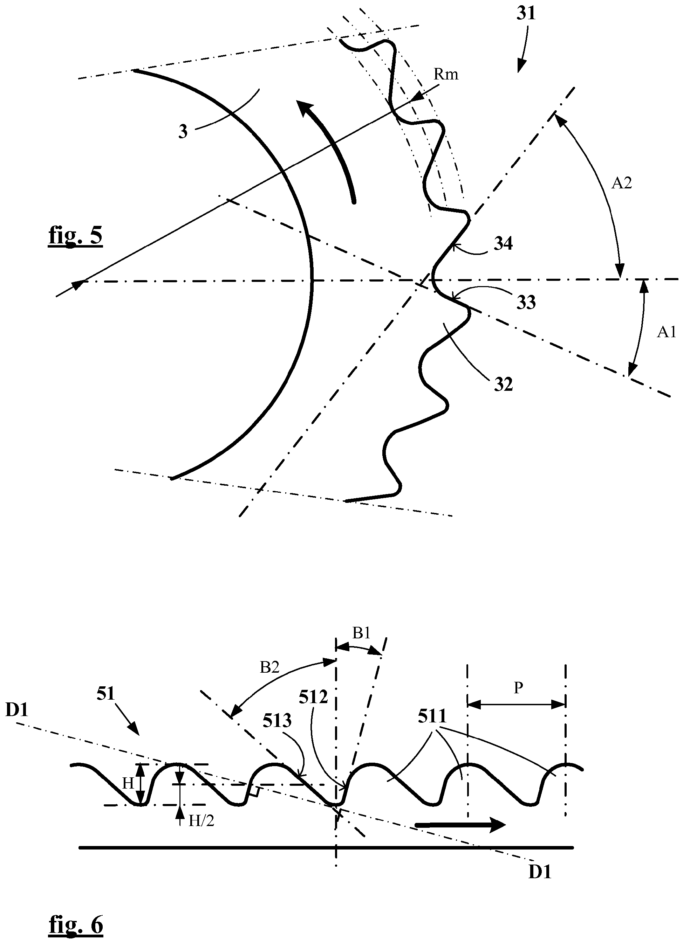

La droite D1 est la droite perpendiculaire à la tangente des dentures au point de contact à mi-hauteur des dents (voir également figure 6). Les demi-droites D2 et D3 sont écartées de D1 d'un angle γ. Le secteur A correspond à la surface comprise entre la droite D1 et la demi-droite D2. Le secteur B correspond à la surface comprise entre la droite D1 et la demi-droite D3. De préférence, l'angle γ n'excède pas 60°. Une manière de s'assurer que la force motrice génère une force d'appui dynamique supplémentaire est de vérifier que la position de l'intersection de l'axe 43 avec le plan médian du pignon respecte l'une des conditions suivantes :
- Si l'axe 43 est situé à l'avant du pignon par rapport au sens d'avancement du vélo (cas représenté à la figure 1), l'intersection doit être située dans le secteur A représenté à la figure 4.
- Si l'axe 43 est situé à l'arrière du pignon par rapport au sens d'avancement du vélo (cas représenté à la figure 2), l'intersection doit être située dans le secteur B représenté à la figure 4.

A la figure 5, on a représenté à une plus grande échelle la denture 31 du pignon 3 afin de mieux visualiser le mode de réalisation asymétrique préféré décrit à la figure 4. On voit que l'angle d'ouverture A1 des faces motrices 33 est sensiblement plus faible que l'angle d'ouverture A2 des faces non-motrices 34.

A la figure 6, on a représenté à une plus grande échelle la denture 51 du bandage afin de mieux visualiser un mode de réalisation préféré. Selon la même logique que pour le pignon moteur, les dents 511 de la denture du bandage ont des faces motrices 512 et des faces non-motrices 513. On voit que l'angle d'ouverture B1 des faces motrices 512 est sensiblement plus faible que l'angle d'ouverture B2 des faces non-motrices 513. La denture a un pas P et une hauteur H. Le pas de la denture est de préférence compris entre 1,8 mm et 5,5 mm et de préférence encore entre 1,8 mm et 2,5 mm afin de minimiser le bruit émis par l'engrènement. On a également représenté sur cette figure la droite D1 évoquée plus haut en référence à la figure 4.

Les figures 5 et 6 illustrent des dentures comportant des faces rectilignes. Dans le cas de faces courbes, les angles décrits ci-dessus doivent être mesurés en considérant la tangente au point correspondant à la demi-hauteur de dent (voir le rayon moyen Rm sur la figure 5 et la demi-hauteur H/2 sur la figure 6).

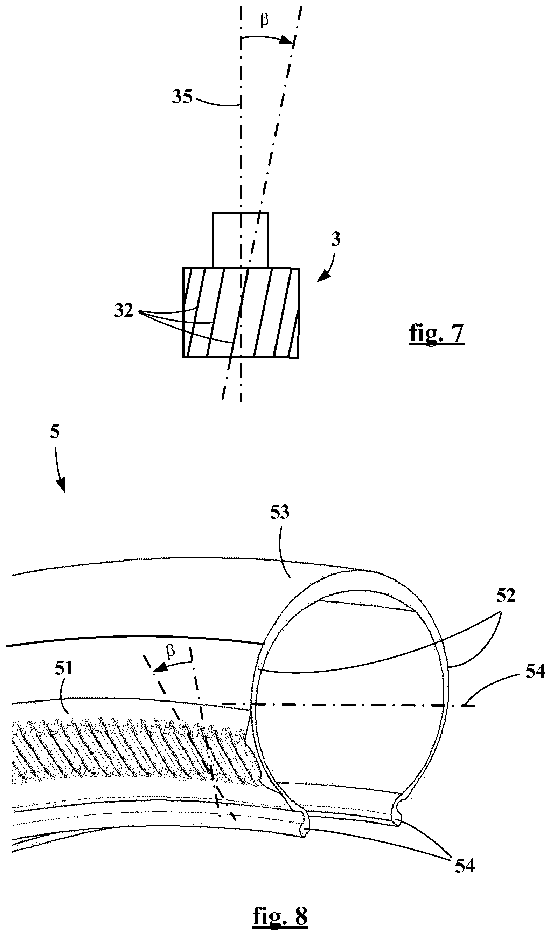

À la figure 7 on a représenté un mode de réalisation préféré du pignon moteur 3 dans lequel la denture est une denture hélicoïdale similaire à celle visible à la figure 1. L'axe des dents 32 est incliné d'un angle β par rapport à l'axe 35 du pignon et donc par rapport à l'arbre de la machine électrique. L'angle β illustré ici est d'environ 15°, mais il peut par exemple être compris entre 4 et 40° et de préférence entre 15° et 30° afin de minimiser le bruit sans trop dégrader la valeur maximale de la force motrice FM transmissible. L'inclinaison de la denture du bandage doit naturellement être adaptée en conséquence. Cette disposition permet de réduire sensiblement le bruit émis par l'engrènement. De préférence, le pignon moteur 3 est réalisé en métal, par exemple en acier. Le cas échéant, la roue-libre évoquée plus haut peut être intégrée à l'intérieur du pignon.

À la figure 8, on voit un mode de réalisation préféré du bandage 5. Il s'agit ici d'un bandage pneumatique comprenant de manière connue en soi des flancs 52, une bande de roulement 53 et des tringles 54 pour son ancrage sur une jante de vélo non représentée. On voit également que les dents de la denture 51 solidaire du flanc sont inclinées par rapport à la direction radiale du bandage d'un angle correspondant à l'angle d'hélice β décrit pour le pignon moteur en référence à la figure 7.

De préférence, la denture du bandage est principalement constituée de caoutchouc d'une dureté Shore A comprise de préférence entre 55 et 85 et de préférence encore entre 75 et 85 pour favoriser la valeur maximale de la force motrice FM transmissible. La denture est de préférence moulée en même temps que le bandage pneumatique mais elle peut aussi être rapportée sur un pneumatique conventionnel moulé précédemment.

Un renfort textile peut être associé à la surface de la denture afin de limiter l'usure par abrasion et le bruit de denture. Il est avantageux d'utiliser des tissus de renfort textile de type polyamide, tissés de manière à être extensibles lors du moulage de la denture.

De manière préférée et comme déjà représenté sur la figure 3, la denture 51 est placée radialement sous l'équateur 54 du pneumatique 5. Alternativement, la denture peut être placée à l'épaule du pneumatique, c'est à dire à proximité de la bande de roulement 53, voire au centre de la bande de roulement 53, en position horizontale.

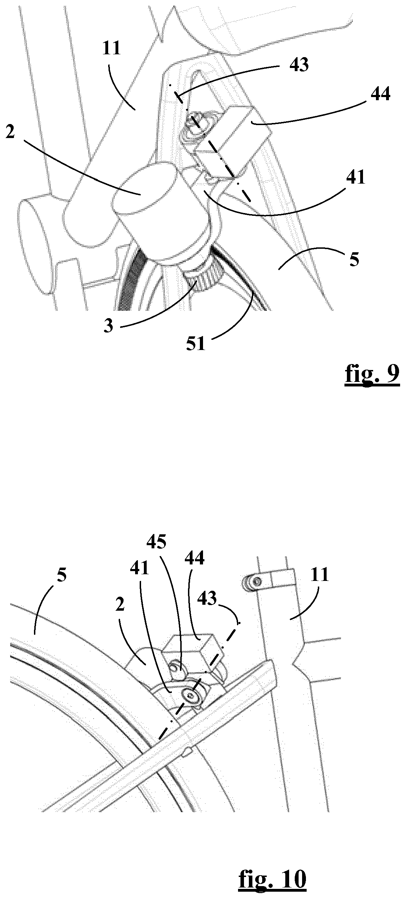

Sur les figures 1 à 4, le dispositif est représenté en position de travail. Aux figures 9 et 10, on a représenté un mode de réalisation de l'invention dans lequel la machine électrique peut être maintenue en position de repli, c'est à dire à l'écart du bandage par un actuateur électrique 44. Sur cet exemple, l'actuateur comporte une came 45 venant en appui contre le bras oscillant 41. La rotation de la came provoque l'écartement du pignon moteur par rapport au bandage et donc le désengrènement du dispositif. L'actuateur peut par exemple être un servomoteur ou un électro-aimant.

La position de repli permet un fonctionnement parfaitement silencieux du vélo en mode non-assisté.

L'actuateur peut être commandé automatiquement en fonction de différents paramètres comme la vitesse du vélo, le pédalage, l'état de charge de la batterie. L'actuateur peut également être commandé par le cycliste, par exemple par l'intermédiaire de l'unité d'affichage et de commande.

Bien sûr le désengrènement du pignon peut également être réalisé manuellement directement au niveau du bras oscillant ou par l'intermédiaire d'un câble relié à une commande à la disposition du cycliste.

La présence d'un mécanisme de roue-libre au sein du dispositif de l'invention en combinaison avec de tels moyens de désengrènement permet en outre d'engrener sans à-coups même lorsque le vélo roule.

## Revendications

1. Dispositif d'assistance électrique pour vélo, ledit dispositif comprenant :
- une machine électrique (2) comprenant un rotor,
- un pignon moteur (3) entrainé par le rotor de la machine électrique,
- des moyens de fixation (4) aptes à fixer la machine électrique sur le vélo (1) à proximité d'un bandage (5) d'une roue (61 ; 62) dudit vélo,
- une source d'énergie électrique (7) pour alimenter la machine électrique,
- des moyens de contrôle (8) de la machine électrique, le pignon moteur comporte une denture (31) destinée à engrener tangentiellement avec une denture complémentaire (51) solidaire dudit bandage (5), **caractérisé en ce que** la denture du pignon moteur (3) est une denture asymétrique dont les dents (32) comprennent des faces motrices (33) et des faces non-motrices (34), l'angle d'ouverture (A1) des faces motrices étant plus faible que l'angle d'ouverture (A2) des faces non-motrices.

2. Dispositif d'assistance électrique pour vélo selon la revendication 1 dans lequel le pignon moteur (3) est entrainé par la machine électrique par l'intermédiaire d'un mécanisme de roue libre de telle sorte que le bandage (5) n'entraine pas la machine électrique (2) lorsque le vélo se déplace en marche avant.

3. Dispositif d'assistance électrique pour vélo selon l'une des revendications précédentes dans lequel la denture (31) du pignon moteur est une denture hélicoïdale.

4. Dispositif d'assistance électrique pour vélo selon l'une des revendications précédentes, ledit dispositif comprenant en outre une unité d'affichage et de commande reliée aux moyens de contrôle (8) de la machine électrique et apte à constituer une interface entre le cycliste et les moyens de contrôle.

5. Dispositif d'assistance électrique pour vélo selon l'une des revendications précédentes, ledit dispositif comprenant en outre un capteur de pédalage relié aux moyens de contrôle (8) de la machine électrique.

6. Dispositif d'assistance électrique pour vélo selon l'une des revendications précédentes dans lequel les moyens de fixation (4) comprennent un bras oscillant (41) articulé sur un support (42), le support étant destiné à être solidaire du vélo et le bras oscillant (41) portant la machine électrique de sorte que la force motrice (FM) transmise au bandage (5) par le pignon moteur (3) engendre une pression radiale supplémentaire dans l'engrènement.

7. Dispositif d'assistance électrique pour vélo selon la revendication 6 dans lequel un moyen élastique exerce une précontrainte sur l'orientation du bras oscillant (41) de sorte que, en l'absence de force motrice (FM), le pignon moteur (3) vient s'appuyer radialement contre le bandage (5) avec une force d'appui (F0) non nulle.

8. Dispositif d'assistance électrique pour vélo selon l'une des revendications précédentes dans lequel les moyens de fixation (4) définissent au moins deux positons de la machine électrique par rapport au bandage, lesdites au moins deux positions comprenant une position de travail dans laquelle le pignon moteur engrène avec la denture du bandage et une position de repli dans laquelle le pignon moteur est maintenu écarté du bandage.

9. Kit d'assistance électrique pour vélo comprenant le dispositif d'assistance électrique selon l'une des revendications précédentes, ledit kit d'assistance électrique comprenant en outre un bandage (5), ledit bandage étant un bandage pneumatique comportant ladite denture complémentaire (51).

10. Kit d'assistance électrique selon la revendication 9 dans lequel ladite denture complémentaire (51) est placée sur un flanc (52) du bandage pneumatique (5).

11. Kit d'assistance électrique selon la revendication 10 dans lequel ladite denture complémentaire (51) est une denture asymétrique dont les dents (511) comprennent des faces motrices et des faces non-motrices, l'angle d'ouverture (B1) des faces motrices (512) étant plus faible que l'angle d'ouverture (B2) des faces non-motrices (513).

12. Kit d'assistance électrique selon l'une des revendications 9 à 11, dans lequel le pas (P) de la denture complémentaire (51) est compris entre 1.8 mm et 5.5 mm et de préférence entre 1.8 mm et 2.5 mm.

13. Vélo à assistance électrique comprenant le kit d'assistance électrique selon l'une des revendications 9 à 12.

14. Vélo à assistance électrique selon la revendication 13 dans lequel le kit d'assistance électrique est installé sur la roue arrière du vélo.

## Patentansprüche

1. Elektrische Hilfsvorrichtung für ein Fahrrad, wobei die Vorrichtung umfasst:
- eine elektrische Maschine (2) umfassend einen Rotor,
- ein Triebrad (3), das durch den Rotor der elektrischen Maschine angetrieben wird,
- Befestigungsmittel (4), die geeignet sind, die elektrische Maschine an dem Fahrrad (1) in der Nähe eines Reifens (5) eines Rads (61; 62) des Fahrrads zu befestigen,
- eine Quelle elektrischer Energie (7) zur Versorgung der elektrischen Maschine,
- Steuermittel (8) der elektrischen Maschine,
wobei das Triebrad eine Zahnung (31) zum tangentialen Eingriff mit einer Komplementärzahnung (51), die mit dem Reifen (5) fest verbunden ist, aufweist, **dadurch gekennzeichnet, dass** die Zahnung des Triebrads (3) eine asymmetrische Zahnung ist, deren Zähne (32) Antriebsseiten (33) und Nichtantriebsseiten (34) umfassen, wobei der Öffnungswinkel (A1) der Antriebsseiten kleiner als der Öffnungswinkel (A2) der Nichtantriebsseiten ist.

2. Elektrische Hilfsvorrichtung für ein Fahrrad nach Anspruch 1, wobei das Triebrad (3) durch die elektrische Maschine mittels eines Freilaufmechanismus derart angetrieben wird, dass der Reifen (5) die elektrische Maschine (2) nicht antreibt, wenn sich das Fahrrad vorwärts bewegt.

3. Elektrische Hilfsvorrichtung für ein Fahrrad nach einem der vorhergehenden Ansprüche, wobei die Zahnung (31) des Triebrads eine Schrägverzahnung ist.

4. Elektrische Hilfsvorrichtung für ein Fahrrad nach einem der vorhergehenden Ansprüche, wobei die Vorrichtung ferner eine Anzeige- und Steuereinheit umfasst, die mit den Steuermitteln (8) der elektrischen Maschine verbunden ist und geeignet ist, eine Schnittstelle zwischen dem Radfahrer und den Steuermitteln zu bilden.

5. Elektrische Hilfsvorrichtung für ein Fahrrad nach einem der vorhergehenden Ansprüche, wobei die Vorrichtung ferner einen Trittsensor umfasst, der mit den Steuermitteln (8) der elektrischen Maschine verbunden ist.

6. Elektrische Hilfsvorrichtung für ein Fahrrad nach einem der vorhergehenden Ansprüche, wobei die Befestigungsmittel (4) einen Schwingarm (41) umfassen, der an einem Träger (42) angelenkt ist, wobei der Träger dazu bestimmt ist, mit dem Fahrrad fest verbunden zu sein, und der Schwingarm (41) die elektrische Maschine so trägt, dass die Antriebskraft (FM), die durch das Triebrad (3) an den Reifen (5) übertragen wird, in dem Eingriff einen zusätzlichen radialen Druck erzeugt.

7. Elektrische Hilfsvorrichtung für ein Fahrrad nach Anspruch 6, wobei ein elastisches Mittel eine Vorspannung auf die Ausrichtung des Schwingarms (41) ausübt, so dass bei Fehlen von Antriebskraft (FM) das Triebrad (3) mit einer Anlagekraft (F0) ungleich null radial gegen den Reifen (5) in Anlage kommt.

8. Elektrische Hilfsvorrichtung für ein Fahrrad nach einem der vorhergehenden Ansprüche, wobei die Befestigungsmittel (4) mindestens zwei Positionen der elektrischen Maschine bezogen auf den Reifen definieren, wobei die mindestens zwei Positionen eine Arbeitsposition, in welcher das Triebrad mit der Zahnung des Reifens in Eingriff steht, und eine zurückgezogene Position, in welcher das Triebrad von dem Reifen beabstandet gehalten wird, umfassen.

9. Elektrisches Hilfs-Set für ein Fahrrad, umfassend die elektrische Hilfsvorrichtung nach einem der vorhergehenden Ansprüche, wobei das elektrische Hilfs-Set ferner einen Reifen (5) umfasst, wobei der Reifen ein Druckluftreifen mit der Komplementärzahnung (51) ist.

10. Elektrisches Hilfs-Set nach Anspruch 9, wobei die Komplementärzahnung (51) auf einer Flanke (52) des Druckluftreifens (5) angebracht ist.

11. Elektrisches Hilfs-Set nach Anspruch 10, wobei die Komplementärzahnung (51) eine asymmetrische Zahnung ist, deren Zähne (511) Antriebsseiten und Nichtantriebsseiten umfassen, wobei der Öffnungswinkel (B1) der Antriebsseiten (512) kleiner als der Öffnungswinkel (B2) der Nichtantriebsseiten (513) ist.

12. Elektrisches Hilfs-Set nach einem der Ansprüche 9 bis 11, wobei der Abstand (P) der Komplementärzahnung (51) zwischen 1,8 mm und 5,5 mm und vorzugsweise zwischen 1,8 mm und 2,5 mm beträgt.

13. Fahrrad mit elektrischer Hilfe, umfassend das elektrische Hilfs-Set nach einem der Ansprüche 9 bis 12.

14. Fahrrad mit elektrischer Hilfe nach Anspruch 13, wobei das elektrische Hilfs-Set am Hinterrad des Fahrrads montiert ist.

## Claims

1. Electrical assist device for a bicycle, said device comprising:
- an electric machine (2) comprising a rotor,
- a drive pinion (3) driven by the rotor of the electric machine,
- fixing means (4) for fixing the electric machine to the bicycle (1) in the vicinity of a tyre (5) of a wheel (61; 62) of said bicycle,
- a source (7) of electrical energy for powering the electric machine,
- means (8) for controlling the electric machine,
the drive pinion includes teeth (31) intended to mesh tangentially with complementary teeth (51) fastened to said tyre (5),
**characterized in that** the teeth of the drive pinion (3) are asymmetrical teeth (32) comprising driving faces (33) and non-driving faces (34), the aperture angle (A1) of the driving faces being smaller than the aperture angle (A2) of the non-driving faces.

2. Electrical assist device according to Claim 1 for a bicycle, wherein the drive pinion (3) is driven by the electric machine via a freewheel mechanism so that the tyre (5) does not drive the electric machine (2) when the bicycle is moving forward.

3. Electric assist device according to any one of the preceding claims for a bicycle, wherein the teeth (31) of the drive pinion are helicoidal teeth.

4. Electric assist device according to any one of the preceding claims for a bicycle, said device further comprising a display and control unit connected to the control means (8) of the electric machine and adapted to constitute an interface between the cyclist and the control means.

5. Electric assist device according to any one of the preceding claims for a bicycle, said device further comprising a pedalling sensor connected to the control means (8) of the electric machine.

6. Electric assist device according to any one of the preceding claims for a bicycle, wherein the fixing means (4) comprise an oscillating arm (41) articulated to a support (42), the support being intended to be fastened to the bicycle and the oscillating arm (41) carrying the electric machine so that the drive force (FM) transmitted to the tyre (5) by the drive pinion (3) generates an additional radial pressure in the gears.

7. Electric assist device according to Claim 6 for a bicycle, wherein elastic means prestress the orientation of the oscillating arm (41) so that, in the absence of drive force (FM), the drive pinion (3) presses radially against the tyre (5) with a non-zero bearing force (F0).

8. Electric assist device according to any one of the preceding claims for a bicycle, wherein the fixing means (4) define at least two positions of the electric machine relative to the tyre, said at least two positions comprising a working position in which the drive pinion meshes with the teeth of the tyre and a folded position in which the drive pinion is held away from the tyre.

9. Electric assist kit for a bicycle, comprising the electric assist device according to any one of the preceding claims, said electric assist kit further comprising a tyre (5), said tyre being a pneumatic tyre including said complementary teeth (51).

10. Electric assist kit according to Claim 9 wherein said complementary teeth (51) are placed on a flank (52) of the pneumatic tyre (5).

11. Electric assist kit according to Claim 10 wherein said complementary teeth (51) are asymmetric teeth (511) comprising driving faces and non-driving faces, the aperture angle (B1) of the driving faces (512) being smaller than the aperture angle (B2) of the non-driving faces (513).

12. Electric assist kit according to any one of Claims 9 to 11, wherein the pitch (P) of the complementary teeth (51) is between 1.8 mm and 5.5 mm and preferably between 1.8 mm and 2.5 mm.

13. Bicycle with electric assist comprising the electric assist kit according to any one of Claims 9 to 12.

14. Bicycle with electrical assist according to Claim 13 wherein the electric assist kit is installed on the rear wheel of the bicycle.
